# EUROPEAN PATENT APPLICATION

(11) **EP 2 218 422 A1**
(43) Date of publication of application: **18.08.2010**
(21) Application number: 07823004.2
(22) Date of filing: 23.10.2007
(51) Int. Cl.: A61C 8/00

(54) **DUAL-FUNCTION SYSTEM FOR DENTAL IMPLANTS**

(30) Priority: 02.10.2007 ES 200702572
(71) Applicant: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(72) Inventor: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(74) Representative: Carpintero Lopez, Francisco
(86) International application number: PCT/ES2007/000597
(87) International publication number: WO 2009/043945

(57) **Abstract**

The object of the invention relates to a dual function system for dental implants comprising a pier (1) anchored to the implant (2) through a retaining bolt (3) and an attachment (4) which can be used without distinction as a transfer element for taking an impression of the position of the implant (2) or as a support for fixing a temporary prosthesis on said implant (2), wherein said attachment (4) comprises axial retaining elements (6) and radial retaining elements (7) preventing its mobility when it is used both to take an impression and when it is used as a support of the temporary crown.

## Description

### Object of the Invention

The object of the present invention patent application is a dual function system in the treatment of edentulism by means of dental implants which allows, on one hand, carrying out the transfer of the position of the implant in the mouth of the patient to a laboratory work model simulating the cavity for preparing the definitive prosthesis, and on the other hand, serving as a base for a temporary prosthesis in the same surgical act in which said implants are inserted in such patient.

More specifically, the object of the invention is a system formed by an axial pier anchored to the dental implant by means of a retaining bolt and an attachment secured to said pier such that it can be used either as a transfer element for taking an impression of the position of the implant or as a support for fixing a temporary prosthesis of one or several teeth on the dental implant inserted in the bone structure of the patient.

### Background of the Invention

Dental implantology techniques are currently widespread, their use and acceptance by both professionals and patients being common. Said techniques allow replacing tooth roots by means of implants to which the corresponding prostheses are in turn coupled.

The phases for implanting said implants are generally summarized in an initial implantation phase, followed by an immediate subsequent osseointegration phase involving a waiting time until the last phase, which is the definitive prosthesis fixing phase.

Said osseointegration time period between the insertion of the implant or implants and the installation of the definitive prosthesis can last between 2 and 6 months depending on the case, a time during which the patient receives a temporary prosthesis fixed on the implants through a support and which, once the osseointegration thereof has ended, is removed to place the definitive prostheses.

On the other hand, whereas temporary prostheses are placed in the same surgical act in which the implants are inserted, definitive prostheses must be manufactured or prepared in the laboratory from the model extracted from the mouth of the patient by means of the transfer of the position of the implant, a transfer which is usually carried out by embedding an attachment which has been previously fixed to the implant in an impression mass which is located in the impression tray, which attachment is passed or transferred from said implant to the impression tray, thus marking in the latter the exact position occupied by said implant in the mouth of the patient, which will allow manufacturing or preparing the prosthesis in the laboratory.

Therefore, in those treatments in which the teeth of the patient are replaced by other artificial ones by means of dental implantology and in which such patient wishes that temporary prostheses be placed during the aforementioned osseointegration period, it is necessary to have a support element on which to place said temporary prosthesis, and, on the other hand, an attachment which allows carrying out the transfer to the impression tray.

Given that these two elements, support and attachment, must carry out completely different functions such as, in the first case, being anchored to the implant to serve as a support for the temporary prosthesis and, in the second case, as a transfer element which must be able to be easily extracted from the mouth of the implant so that it is positioned in the impression tray, such elements are usually presented as two independent and different parts, it therefore being necessary for the dentist to have both in order to carry out the complete treatment.

Furthermore, the need to have two different elements, support and attachment, also conditions the type of pier on which they are usually anchored, which involves the use of a larger number of elements which results in a greater complexity and, especially, a higher cost.

### Description of the Invention

The dual function system for dental implants of the invention described below solves the previously indicated drawbacks, since the complete treatment is carried out with a single type of pier and a single type of attachment carrying out the functions of support of the temporary prosthesis and of transfer element.

More specifically, the dual function system for dental implants of the invention will be involved in the implantation process as follows:
Once the implant or implants are fixed in the bone structure of the patient and a pier, preferably made of titanium, is fixed thereon with a threaded bolt, the soft tissue located around this connection is sutured for the purpose of preventing the invasion of said tissue on the shoulder of the implant or of the pier, after which time the treatment can be commenced, which treatment will consist, in the first place, of positioning the attachment on said pier so that by means of an impression-taking tray or the like said attachment is easily extracted, carrying out the transfer of the position of the implant to the work model and being able to prepare the prosthesis in the laboratory.
Once said operation is carried out, the temporary prosthesis may already be placed on the implant. Thus, a new attachment such as the one used above for the transfer is placed on the mentioned pier, which attachment will now serve as a support for said temporary dental crown or prosthesis, which will be connected to the attachment by fixing means which create an integral connection between both.

In relation to the elements forming the dual function system for dental implants of the invention, they are the following:
- A pier fixed to the implant by means of its corresponding retaining through bolt; and
- An attachment which can be used both in the operation for transferring the position of the implant to the laboratory work model and in the operation for fixing a temporary crown.

To carry out these two operations it is therefore necessary to have a form of connection between the attachment and the pier which on one hand ensures a connection which is strong enough for such attachment to remain anchored when it works as a support for the temporary crown, and on the other hand is weak enough so that the attachment is detached from the pier and transferred to the impression tray or the like indicating the exact position of the implant.

Said connection is carried out due to the tapering that the pier has at its upper part, forming a retaining snap-fit system for the attachment, which connection, as has been stated, is resistant enough to prevent losses of the temporary crown but weak enough to allow the extraction in the transfer operation.

On the other hand, the attachment used for the dual function has a structure such that at its lower part, intended to be connected to the pier, the diameter allows the connection thereto in the aforementioned manner, and at its upper part has axial and radial retaining elements preventing its mobility both when it is surrounded by material for taking the impression and when it is surrounded by acrylic resin or the like for the fixing by bonding of the temporary crown.

More specifically, said retaining elements are formed by a series of circumferential notches or recesses located at different heights, in which the material used in the bonding or sealing for the definitive connection of the temporary crown with the shape of the tooth and the outer surface of the support of the invention, which form a single piece after the bonding material has set, will be housed.

Thus, once the temporary crown and support assembly is positioned on the titanium pier fixed to the implant, the assembly already fulfills the temporary aesthetic functionality, and, in the event that the dentist or professional considers it appropriate, it may even fulfill a masticatory functionality.

### Description of the Drawings

To complement the description which is being made and for the purpose of aiding to better understand the features of the invention according to a preferred practical embodiment thereof, a set of drawings is attached as an integral part of said description, in which the following has been depicted with an illustrative and non-limiting character:
Figure 1 shows a perspective view of the pier and its retaining bolt.
Figure 2 shows respective elevational views, one of them being a sectioned view of the connection of the pier with its retaining bolt and in which the tapering of the upper part of said pier is shown.
Figure 3 shows a perspective view of the attachment used in the dual function system of the invention.
Figure 4 shows an elevational view of the connection of the attachment to the pier.

### Preferred Embodiment of the Invention

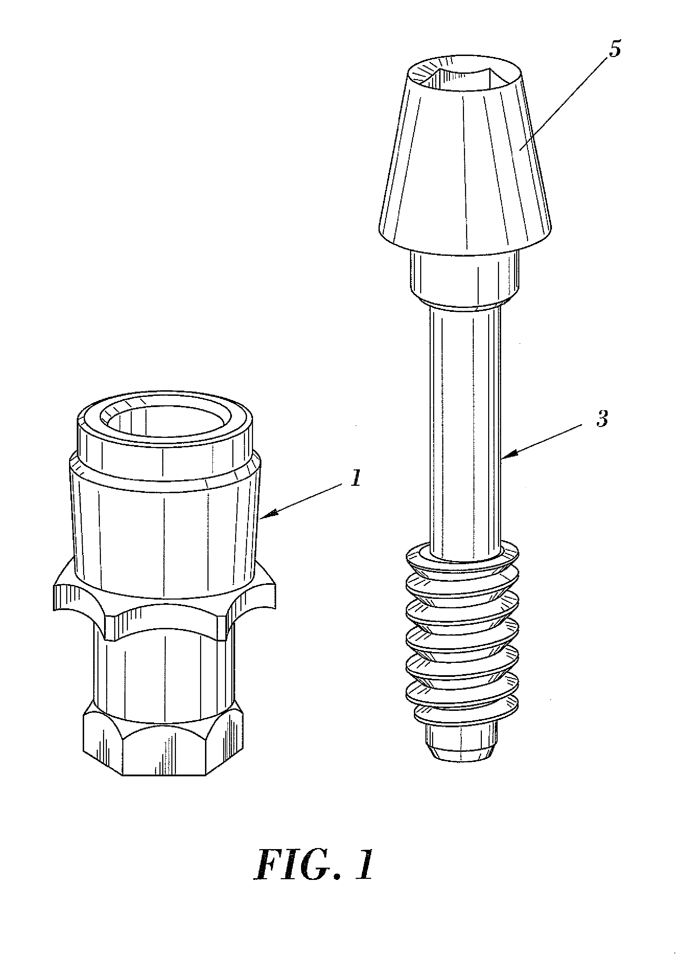

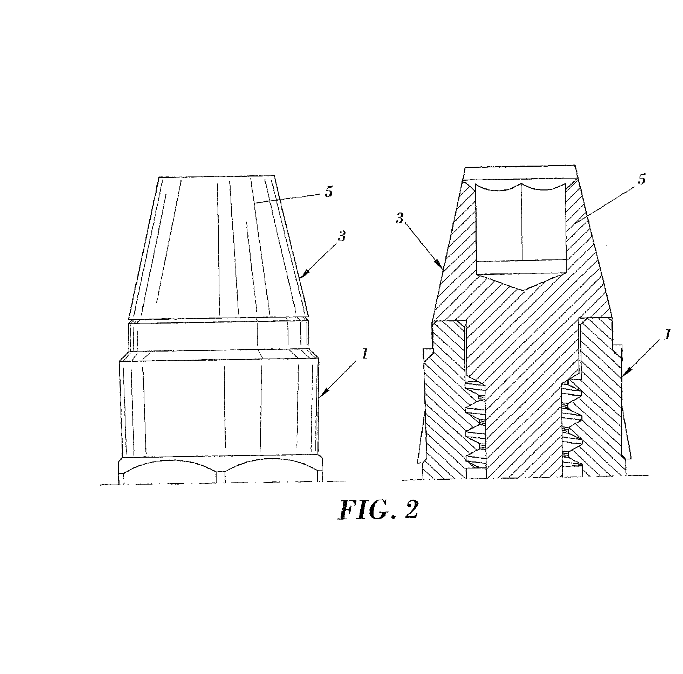

In view of the figures, it is observed how the pier (1) of the dual function system of the invention is connected to the implant (2) due to a retaining through bolt (3), especially in Figures 1 and 2.

Furthermore, the connection of both parts, the pier (1) and the retaining bolt (3), as well as the tapering that said pier (1) has at its upper part is especially seen in Figure 2, which tapering ranges between 1º and 2º with respect to the vertical and is used to fix the attachment (4) forming part of the dual function system of the invention.

Said attachment (4) is used both in the operation for transferring the position of the implant (2) to the laboratory work model and in the operation for fixing a temporary crown (not depicted).

On the other hand, and according to a possible embodiment of the invention, the head (5) of the retaining bolt (3) has a marked tapering with its smaller base upwards and its larger base intended to be supported in the larger diameter of the pier (1), which together with the tapering of the latter facilitates the insertion and extraction of the attachment (4) while at the same time it is a solid support core for the temporary prosthesis.

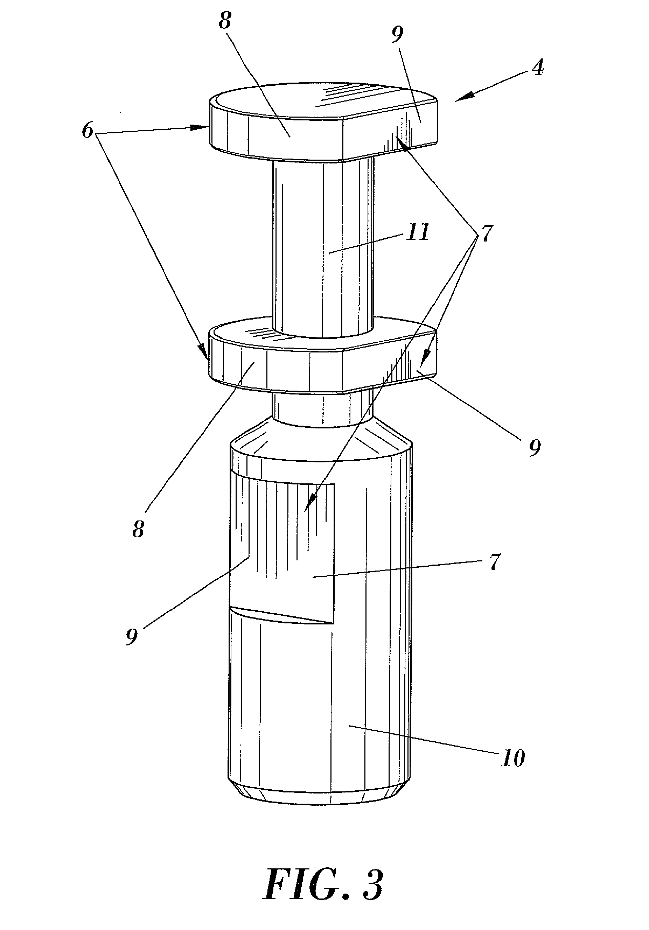

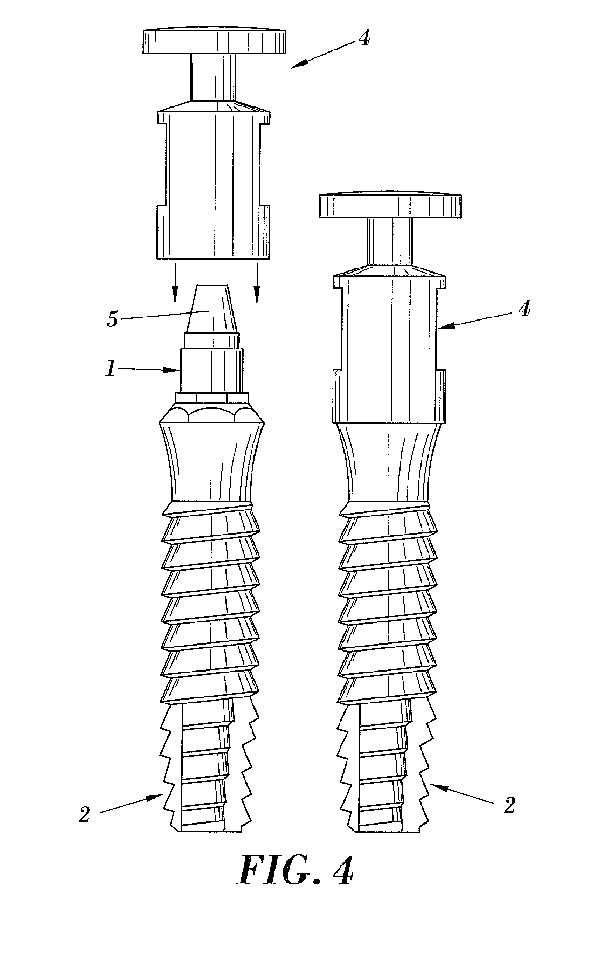

In relation to the attachment (4), and as observed in Figures 3 and 4, the latter will be formed by a structure having axial retaining elements (6) and radial retaining elements (7) preventing its mobility both when it is surrounded by material for taking the impression and when it is surrounded by acrylic resin or the like for the fixing by bonding of the temporary crown.

More specifically, the axial retaining elements (6) are formed by at least one stop (8), preferably circular with a suitable diameter and height for carrying out the transfer in the impression tray, and which is connected to the others or the base (10) of the attachment (4) by means of a section (11) with a smaller diameter or section than said stops (8) and base (10).

The radial retaining elements (7) are formed, however, by a series of circumferential notches or recesses (9) located at different heights, both in the base (10) of the attachment (4) and in the stops (8) themselves.

According to a preferred embodiment, said attachment (4) will furthermore be made of a material such that it allows its modification, either by cutting any of the stops (8) through the sections (11) with a smaller diameter or by recessing the perimeter of said stops (8) for the purpose of adapting it to the different situations and physiognomies which may occur in this type of treatment.

## Claims

1. Dual function system for dental implants comprising a pier (1) anchored to the implant (2) through a retaining bolt (3), **characterized in that** it further comprises an attachment (4) and **in that** said pier (1) has means which allow fixing said attachment (4) such that the latter can be used without distinction as a transfer element for taking an impression of the position of the implant (2) or as a support for fixing a temporary prosthesis on said implant (2).

2. Dual function system for dental implants according to claim 1, **characterized in that** to fix the pier (1) to the attachment (4) said pier (1) has a tapering facilitating the snap-fit between both.

3. Dual function system for dental implants according to claim 2, **characterized in that** the tapering of the pier (1) for fixing the attachment (4) ranges between 1º any 2º with respect to the vertical.

4. Dual function system for dental implants according to any of the previous claims, **characterized in that** the attachment (4) comprises axial retaining elements (6) and radial retaining elements (7) preventing its mobility when it used for taking an impression and when it used as a support of the temporary crown.

5. Dual function system for dental implants according to claim 4, **characterized in that** the axial retaining elements (6) are formed by at least one stop (8) which is connected to the other stops (8) and/or to the base (10) of the attachment (4) by means of a section (11) with a smaller diameter or section than said stops (8) and than said base (10).

6. Dual function system for dental implants according to claim 4, **characterized in that** the radial retaining elements (7) comprise circumferential recesses (9) located at different heights of the attachment (4).

7. Dual function system for dental implants according to claim 6, **characterized in that** the circumferential recesses (9) are located in the base (10) of the attachment (4) and/or in the stops (8).

8. Dual function system for dental implants according to claims 5 to 7, **characterized in that** the attachment (4) is made of a material such that its allows its cutting in the sections (11) and the recess of the stops (8).

9. Dual function system for dental implants according to claim 1, **characterized in that** the head (5) of the retaining bolt (3) is tapered such that its larger base is supported on the larger diameter of the pier (1) to facilitate the insertion and extraction of the attachment (4).
